# FASCICULE DE BREVET EUROPEEN

(11) **EP 1 160 047 B1**
(45) Date de publication et mention de la délivrance du brevet: **15.10.2003**
(21) Numéro de dépôt: 01401193.6
(22) Date de dépôt: 10.05.2001
(51) Int. Cl.: B23K 26/14

(54) **Procédé de soudage hybride par laser et arc électrique, notamment de pièces automobiles ou de tubes**
Hybrides Schweissverfahren mit Laser und elektrischem Lichtbogen, insbesondere von PKW-Werkstücken und Röhren
Hybrid welding process using laser and electric arc, in particular of automobile workpieces or tubes

(30) Priorité: 31.05.2000 FR 0007014
(43) Date de publication de la demande: 05.12.2001
(73) Titulaire: L'air Liquide, S.A. à Directoire et Conseil de Surveillance pour l'Etude et l'Exploitation des Procédés Georges Claude, 75321 Paris Cedex 07 (FR); LA SOUDURE AUTOGENE FRANCAISE, F-75007 Paris (FR)
(72) Inventeur: Briand, Francis, 75009 Paris (FR); Bonnet, Christian, 95650 Puiseux-Pontoise (FR)
(74) Mandataire: Pittis, Olivier

(56) Documents cités:
- WO-A-96/09135
- US-A- 3 736 402

## Description

La présente invention concerne un procédé et une installation hybrides de soudage combinant un faisceau laser et un arc électrique, en particulier un arc plasma conformément au préambule de la revendication 8 (voir, par example, EP-A-0 793 558), et son application au soudage des flancs raboutés destinés à l'industrie automobile ou 'tailored blanks".

La technologie du laser est largement connue et utilisée depuis des années pour souder des matériaux métalliques divers, telles des pièces en aciers alliés ou non, en aciers revêtus, en aciers inoxydables, en aluminium et alliages d'aluminium. D'une façon générale, une installation de soudage laser comprend un oscillateur laser solide ou à gaz produisant un faisceau monochromatique cohérent de haute énergie, un chemin optique équipé de miroirs de renvois ou bien une fibre optique permettant d'amener le faisceau laser vers une tête de soudage située en regard de la tôle à souder. La tête de soudage comprend classiquement une lentille ou un ou plusieurs miroirs de focalisation de façon à focaliser le faisceau laser en un ou plusieurs points de focalisation dans l'épaisseur du matériau à souder et au niveau du plan de joint formé par réunion bord-à-bord des parties de pièces à souder l'une à l'autre de façon à concentrer localement suffisamment de densité de puissance pour fondre le matériau à souder. Habituellement, la tête de soudage comprend un dispositif d'amenée de gaz permettant l'alimentation en gaz de soudage, encore appelé gaz d'assistance, par l'intermédiaire d'une buse de distribution de gaz placée coaxialement au faisceau laser. Ce dispositif d'amené de gaz peut être aussi extérieur à la tête de soudage laser proprement dite.

Une solution alternative pour souder des bords d'une ou plusieurs pièces à unir l'un avec l'autre, par exemple les bords longitudinaux d'une feuille métallique formée en tube, ou deux pièces métalliques mises bord-à-bord l'une avec l'autre, consiste à réaliser la fusion des bords à unir au moyen d'un ou plusieurs arcs électriques.

Certains de ces procédés couramment utilisés dans l'industrie utilisent du gaz soit en tant que gaz de protection, soit en tant que gaz actif. A ce titre, on peut citer les procédés de soudage TIG (Tunsgten Inert Gas), MIG (Metal Inert Gas), MAG (Metal Active Gas) ou encore les procédés à l'arc plasma.

A l'inverse, d'autres procédés n'utilisent généralement pas de gaz durant le soudage du tube, par exemple les procédés de soudage à l'arc submergé.

Toutefois, les procédés de soudage par laser ou les procédés de soudage à l'arc présentent chacun des inconvénients qui leurs sont propres.

Dès lors, ont été développés des procédés mixtes ou hybrides combinant un ou plusieurs faisceaux laser avec un ou plusieurs arcs électriques, en particulier des procédés combinés de soudage par faisceau laser et jet de plasma d'arc, encore appelés procédés de soudage plasma-laser.

Divers procédés de soudage hybrides arc et laser ont été décrits notamment dans les documents EP-A-793558 ; EP-A-782489 ; EP-A-800434 ; US-A-5,006,688 ; US-A-5,700,989 ; EP-A-844042 ; *Laser GTA'Welding of aluminium alloy 5052*, TP Diebold et CE Albright, 1984, p. 18-24 ; SU-A-1815085, US-A-4,689,466 ; *Plasma arc* augmented *laser welding*, RP Walduck et J Biffin, p.172-176, 1994; ou *TIG or MIG arc augmented laser welding of thick mild steel plate, Joining and Materials,* de J Matsuda et al., p. 31-34, 1988.

De façon générale, le procédé de soudage plasma-laser ou laser-arc est un procédé de soudage hybride ou mixte qui associe le soudage à l'arc électrique à un faisceau laser.

Le procédé arc-laser consiste à générer un arc électrique entre une électrode, fusible ou non fusible, et la pièce à souder, et à focaliser un faisceau laser de puissance, notamment un laser de type YAG ou de type CO₂, dans la zone d'arc, c'est-à-dire au niveau ou dans le plan de joint obtenu par réunion bord-à-bord des parties à souder entre elles.

Un tel procédé hybride permet d'améliorer considérablement les vitesses de soudage par rapport au soudage laser seul ou au soudage à l'arc seul.

De plus, un tel procédé hybride permet, en outre, d'accroître notablement les tolérances de positionnement des pièces avant soudage puisque le soudage par laser seul exige, en effet, une précision importante de positionnement des parties à souder à cause de la petite taille du point focal du faisceau laser.

La mise en oeuvre d'un procédé plasma-laser, et plus généralement d'un procédé arc-laser, requiert l'utilisation d'une tête de soudage qui permet de combiner dans un espace réduit le faisceau laser et son dispositif de focalisation, ainsi qu'une électrode de soudage adaptée. Plusieurs configurations de têtes sont décrites dans les documents susmentionnés et l'on peut dire, en résumé, que le faisceau laser et l'arc électrique ou le jet de plasma peuvent être délivrés par une seule et même tête de soudage, c'est-à-dire qu'ils sortent par le même orifice, ou alors par deux têtes de soudage distinctes, l'une délivrant le faisceau laser et l'autre l'arc électrique ou le jet de plasma, ceux-ci se réunissant dans la zone de soudage.

Les procédés hybrides arc-laser sont notamment adaptés au soudage des flancs raboutés (ou tailored blanks) pour l'industrie automobile, dans le sens ou, en plus des avantages précédemment cités, il permet d'obtenir un cordon de soudure bien mouillé et exempt de caniveaux, comme le rappelle les documents EP-A-782489 ou le document *Laser plus arc* equals *power*, *Industrial Laser Solutions,* February 1999, p.28-30.

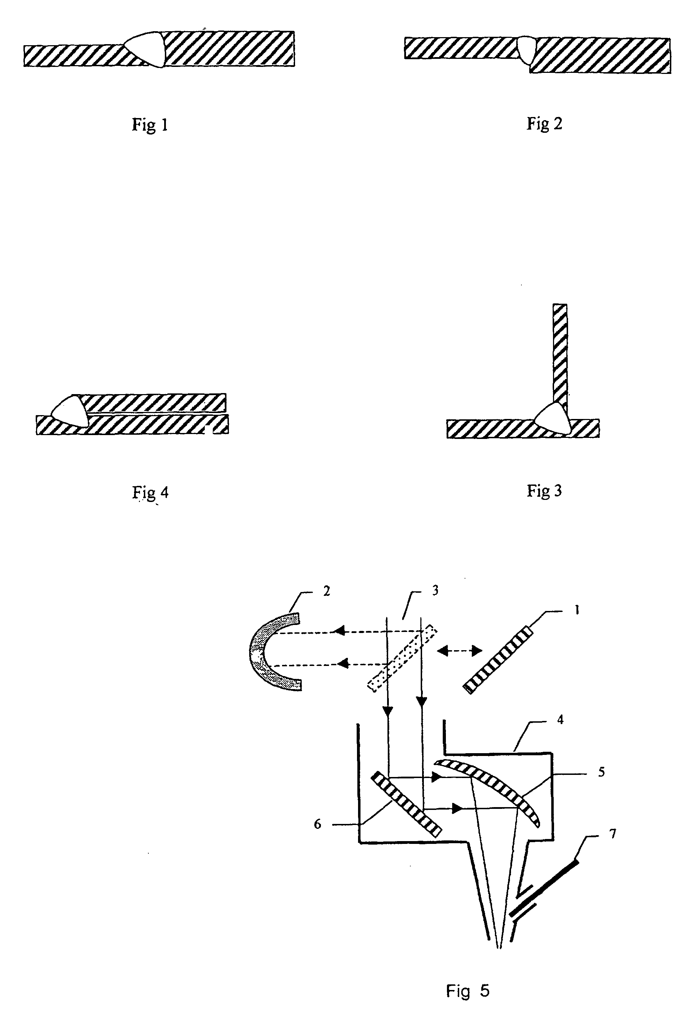

Une telle soudure consiste à unir entre elles deux tôles ou pièces, en général en acier, en acier galvanisé ou en aluminium, d'épaisseurs différentes et/ou de nuances différentes. Suivant les méthodes et les préparations de soudage utilisées, le joint à souder se caractérise classiquement par une différence de niveau entre les plans supérieurs de chacune des pièces à souder conduisant ainsi à la génération d'une "marche", comme montré sur la figure 1.

On peut également rencontrer la situation inverse, à savoir des joints de type flancs raboutés dont les plans supérieurs sont alignés mais dont les plans inférieurs ne sont pas de même niveau et où donc la « marche » est située à l'envers du joint à souder comme visible sur la figure 2.

On trouve fréquemment ce genre de soudures (Fig. 1 ou Fig. 2) dans l'industrie automobile où les pièces ainsi soudées sont ensuite embouties pour leur donner leurs formes finales, par exemple, les différentes pièces qui entrent dans la fabrication d'une carrosserie de voiture et par exemple les portières, le toit, le capot ou le coffre. On peut aussi en trouver dans les éléments de structure de l'habitacle.

En outre, existe aussi le cas de pièces à souder ensemble qui sont de même épaisseur mais de nuances différentes l'une de l'autre.

Ce procédé hybride est également bien adapté au soudage de nombreux types de joints, tels que, par exemple, le soudage d'angle schématisé sur la figure 3 et le soudage à clin montré sur la figure 4.

Au plan industriel, la mise en oeuvre d'un tel procédé hybride nécessite des machines ou des robots qui comportent soit des moyens d'acheminement et de mouvement des pièces à souder sous la tête de soudage plasma-laser, soit des moyens de déplacement de la tête elle-même sur la pièce à souder.

Suivant le nombre de joints à souder par pièce et suivant le nombre de pièces à souder, ces machines ou ces robots exigent non seulement un positionnement précis par rapport au joint de soudure à réaliser mais aussi et surtout de pouvoir arrêter l'opération de soudage de manière intermittente.

En effet, comme dit ci-avant, chacune des pièces à souder peut comporter plusieurs joints à souder, par exemple localisés en différents endroits de la pièce en question, et il est alors impératif d'arrêter l'opération de soudage pendant que la machine ou le robot vient positionner la tête de soudage sur le joint suivant, ou l'inverse.

De même, il faut procéder à la même opération lors du chargement de pièces nouvelles, c'est-à-dire après soudage d'une pièce et avant soudage de la pièce suivante.

Cela signifie que, lors de ces opérations d'arrêt de soudage, il faut que ni le faisceau laser, ni l'arc plasma, n'arrive plus sur la pièce.

Dans le cas de l'arc plasma, empêcher que l'arc n'aille se fixer sur la ou les pièces à souder est facilement réalisable en pratique :
- soit en éteignant l'arc, c'est-à-dire en réalisant une mise à zéro du courant de soudage,
- soit en empêchant le transfert de l'arc sur la pièce à souder, c'est-à-dire en passant d'une phase d'arc de soudage à une phase d'arc pilote, pendant laquelle l'arc électrique est établi entre l'électrode et, par exemple, la surface intérieure de la tête de soudage plasma laser et donc, sans aucun contact entre l'arc électrique et la ou les pièces à souder. Cela est en général obtenu en diminuant fortement le courant d'arc électrique (intensité) et en mettant simultanément la partie terminale de la tête de soudage plasma laser au potentiel de la pièce à souder.

Eventuellement, on peut aussi, de manière complémentaire, réduire le débit de gaz et/ou changer la nature du gaz.

Ainsi, on peut citer le document EP-A-793558 qui préconise une interruption quasi-simultanée de l'arc électrique et du faisceau laser en opérant d'abord une réduction du courant électrique jusqu'à l'arrêt de l'arc plasma, puis une désexcitation du laser à un moment sélectionné après arrêt de l'arc plasma.

Toutefois, cette façon de procéder n'est pas idéale car elle n'est pas adaptée à une production en série de pièces soudées, notamment de par la perte de temps et de productivité qu'elle occasionne.

En effet, un problème se pose avec le faisceau laser car, contrairement à la procédure pouvant être appliquée à l'arc électrique, on ne peut pas éteindre ou arrêter le faisceau laser puis le redémarrer ou le rallumer aussi simplement que l'arc car cela conduit à des instabilités importantes de puissance lors de sa remise en route, au début de la phase de soudage suivante, ainsi qu'à une perte de temps et donc de productivité car le rallumage du laser, en début du soudage du joint suivant, nécessite une durée plus ou moins longue pendant laquelle rien ne se passe, c'est-à-dire qu'aucun soudage ne peut être opéré, cette durée étant nécessaire pour stabiliser thermiquement l'oscillateur laser.

De là, la présente invention vise à résoudre ce problème en proposant un procédé de soudage hybride laser-arc amélioré qui permette d'éviter d'éteindre le faisceau laser durant la période de temps s'écoulant entre la fin de la réalisation d'un joint de soudure et le début de réalisation du joint de soudure suivant, en particulier pour permettre à la machine ou au robot de venir positionner la tête de soudage et le début du plan de joint à réaliser relativement l'un par rapport à l'autre et/ou pour permettre un chargement de pièces nouvelles à souder ensemble, c'est-à-dire après soudage d'une ou plusieurs pièces et avant soudage de la ou des pièces suivantes, et ce sans que le laser n'aille frapper la ou les pièces à souder ou le bâti-support supportant les pièces durant leur soudage de manière à éviter une dégradation des pièces ou de l'installation elle-même.

La solution apportée par la présente invention est alors un procédé de soudage hybride suivant la revendication 1, ainsi qu'une installation de soudage hydride suivant la revendication 8 et l'utilisation d'un tel procédé ou d'une telle installation dans le soudage de pièces destinées, en particulier, à l'industrie automobile, telles des flancs raboutés ou tailored blanks (voir les revendications 12 à 15)..

Selon le cas, le procédé de soudage de l'invention peut comprendre l'une ou plusieurs des caractéristiques suivantes :
- le faisceau laser est émis par un laser de type YAG ou CO₂ et/ou en ce que l'arc électrique est un arc-plasma, de préférence le faisceau laser et ledit arc sont délivrés par une tête de soudage unique.
- pendant au moins une partie de la durée d'arrêt de soudage s'écoulant entre la fin du soudage d'un premier joint de soudure et le commencement du soudage d'un deuxième joint de soudure, notamment au tout début de cette phase d'arrêt de soudage ou à la fin de la phase de soudage, on interrompt, on atténue ou on diminue l'intensité de l'arc électrique
- la ou les pièces à souder sont en un métal ou un alliage métallique choisi parmi les aciers revêtus ou non-revêtus, en particulier les aciers d'assemblage, les aciers HLES, les aciers au carbone, les aciers comportant en surface une couche d'alliage de zinc, les aciers inoxydables, les aluminium ou alliages d'aluminium, les aciers à hautes limites élastiques, de préférence la ou lesdites pièces à souder sont des flancs raboutés, en particulier utilisables pour fabriquer des éléments de carrosserie d'un véhicule.
- on utilise en tant que gaz d'assistance du faisceau laser un gaz choisi parmi l'argon, l'hélium, l'azote ou leurs mélanges et/ou on utilise en tant que gaz plasmagène un gaz choisi parmi l'argon, l'hélium, l'azote, l'hydrogène ou leurs mélanges.
- les pièces à souder ensemble ont une même épaisseur ou des épaisseurs différentes et/ou être d'une même nuance de matériau ou de nuances différentes, par exemple des nuances des séries 5000 et 6000.
- les pièces à souder ensemble sont en aciers nus ou revêtus, en aluminium ou en alliages d'aluminium.
- les pièces à souder ensemble sont constituées de métaux ou d'alliages différents, par exemple l'une des pièces est en acier inoxydable et l'autre pièce est acier (non-inoxydable).
- on soude les pièces à plat ou en position, c'est-à-dire bord à bord, ou à clin ou en angle.

Selon le cas, l'installation de soudage de l'invention peut comprendre l'une ou plusieurs des caractéristiques suivantes :
- elle comporte, en outre, des moyens support de pièces permettant de supporter et/ou maintenir les pièces à souder durant le soudage ; des moyens d'amenée automatique de pièces à souder permettant d'amener et/ou de positionner automatiquement la ou les pièces à souder sur lesdits moyens support ; des moyens de maintien de pièces à souder permettant de maintenir en position les pièces à souder, durant le soudage, sur lesdits moyens support ; et/ou des moyens d'évacuation automatique des pièces soudées permettant d'enlever les pièces desdits moyens support après soudage.
- elle comporte des moyens de pilotage permettant de piloter ou commander automatiquement les moyens d'amenée de pièces à souder ; les moyens d'évacuation des pièces soudées ; les moyens de déviation du faisceau laser ; le début et/ou la fin du soudage ; et/ou le déplacement relatif de tête distribuant l'arc et de la tête distribuant le faisceau laser par rapport aux pièces à souder.
- le faisceau laser est émis par un laser de type YAG ou CO₂ et/ou en ce que l'arc électrique est délivrée par une torche à arc-plasma, de préférence le faisceau laser et ledit arc sont délivrés par une tête de soudage unique.

Selon encore un autre aspect, l'invention a trait à un procédé de fabrication de pièces ou de structures soudées destinées à l'industrie automobile dans lequel on réalise au moins un soudage desdites pièces par mise en oeuvre d'un procédé de soudage hybride laser-arc selon l'une des revendications 1 à 7 ou d'une installation de soudage selon l'une des revendications 8 à 11.

Dit autrement, l'invention porte également sur une utilisation d'une installation de soudage selon l'invention pour souder au moins un flanc rabouté destiné à constituer au moins une partie d'un élément de carrosserie de véhicule, ainsi que sur l'utilisation d'un procédé de soudage hybride selon l'invention pour assembler par soudage des pièces métalliques ayant des épaisseurs différentes, en particulier des flancs raboutés.

L'invention concerne, par ailleurs, un procédé de fabrication d'éléments de carrosseries de véhicules dans lequel on réalise un soudage de pièces métalliques entrant dans la constitution desdits éléments de carrosserie par mise en oeuvre d'un procédé de soudage hybride laser-arc selon l'invention, de préférence des pièces métalliques en aluminium ou en alliage d'aluminium.

En d'autres termes, selon la présente invention, il n'est pas nécessaire d'arrêter le faisceau laser durant les phases d'arrêt de soudage séparant la réalisation de deux joints successifs ou le soudage de pièces successives.

En effet, selon l'invention, le faisceau laser est simplement dévié dans une cavité d'absorption où le rayonnement laser est absorbé.

Cette déviation peut être réalisée grâce, par exemple, à un miroir mobile, qui vient intercepter le faisceau et qui l'envoi vers ladite cavité où la puissance laser est dissipée, ce qui implique une synchronisation entre le mouvement du miroir de renvoi et suivant les cas, le démarrage de la phase de soudage, l'arrêt de la phase de soudage, le mouvement de la pièce à souder ou de la tête de soudage plasma-laser.

Sur la figure 5 est schématisé un exemple de réalisation selon l'invention. Une tête de soudage plasma laser 4 est composée en général de deux miroirs plan 6 et sphérique 5 ou parabolique, et d'un orifice par lequel est inséré dans la tête de soudage l'électrode d'arc 7. Le faisceau laser 3 peut ainsi être focalisé sur la pièce à souder. Quand on veut arrêter le soudage, on vient interposer le miroir de renvoi 1 sur le trajet du faisceau de manière à ce que ledit faisceau laser soit dévié vers un puit optique 2 où le faisceau laser est absorbé. De même, quand on veut recommencer à souder, on procédé à l'opération inverse, c'est-à-dire que le miroir de renvoi 1 quitte le trajet du faisceau.

Le procédé et l'installation de l'invention sont particulièrement bien adaptés à une production en série de pièces pour l'industrie automobile, tels des flancs raboutés utilisables pour fabriquer des portières de véhicules automobiles ou d'autres éléments du véhicule.

## Revendications

1. Procédé de soudage d'une ou plusieurs pièces métalliques à souder par mise en oeuvre d'au moins un faisceau laser et d'au moins un arc électrique, en particulier un arc-plasma, dans lequel, après réalisation d'au moins un joint de soudure sur la ou lesdites pièces :
(a) le faisceau laser est envoyé et/ou dévié, au moyen d'un ou plusieurs miroirs de renvoi mobiles, vers des moyens d'absorption de rayonnement comprenant au moins une cavité d'absorption permettant d'absorber au moins une partie du rayonnement dudit faisceau laser,
(b) l'intensité de l'arc électrique est atténuée ou diminuée ou l'arc est interrompu approximativement en synchronisme avec l'envoi et/ou la déviation du faisceau laser vers les moyens d'absorption de rayonnement permettant d'absorber au moins une partie du rayonnement dudit faisceau laser,
et dans lequel :
(c) le mouvement du ou des miroirs de renvoi est synchronisé avec l'arrêt de la phase de soudage, le mouvement de la ou des pièces à souder et/ou de la tête de soudage.

2. Procédé de soudage selon la revendication 1, **caractérisé en ce que** le faisceau laser est envoyé et/ou dévié vers les moyens d'absorption de rayonnement pendant au moins une partie de la durée d'arrêt de soudage s'écoulant entre la fin du soudage d'un premier joint de soudure et le commencement du soudage d'un deuxième joint de soudure, de préférence pendant toute ladite durée d'arrêt de soudage.

3. Procédé de soudage selon l'une des revendications 1 ou 2, **caractérisé en ce que** le faisceau laser est émis par un laser de type YAG ou CO₂ et/ou **en ce que** l'arc électrique est un arc-plasma.

4. Procédé de soudage selon l'une des revendications 1 à 3, **caractérisé en ce que** le faisceau laser et ledit arc sont délivrés par une tête de soudage unique.

5. Procédé de soudage selon l'une des revendications 1 à 4, **caractérisé en ce que**, pendant au moins une partie de la durée d'arrêt de soudage s'écoulant entre la fin du soudage d'un premier joint de soudure et le commencement du soudage d'un deuxième joint de soudure, notamment au tout début de cette phase d'arrêt de soudage ou à la fin de la phase de soudage, on interrompt, on atténue ou on diminue l'intensité de l'arc électrique.

6. Procédé de soudage selon l'une des revendications 1 à 5, **caractérisé en ce que** la ou les pièces à souder sont en un métal ou un alliage métallique choisi parmi les aciers revêtus ou non-revêtus, en particulier les aciers d'assemblage, les aciers au carbone, les aciers comportant en surface une couche d'alliage de zinc, les aciers inoxydables, les aluminium ou alliages d'aluminium, les aciers à hautes limites élastiques aussi dénommés HLES, de préférence la ou lesdites pièces à souder sont des flancs raboutés, en particulier utilisables pour fabriquer des éléments de carrosserie d'un véhicule.

7. Procédé de soudage selon la revendication 1, **caractérisé en ce qu'**il comprend au moins une étape de soudage combinant l'arc électrique, en particulier un arc plasma, et le faisceau laser.

8. Installation de soudage hybride arc-laser comprenant
- au moins un générateur de faisceau laser pour délivrer au moins un faisceau laser, et
- au moins une électrode alimentée par au moins une source de courant électrique pour générer au moins un arc électrique,
**caractérisée en ce qu'**elle comprend, en outre :
- des moyens d'absorption de rayonnement laser comprenant au 5 moins une cavité d'absorption permettant d'absorber, au moins temporairement, au moins une partie du rayonnement dudit faisceau laser et
- des moyens de déviation de faisceau comprenant un ou plusieurs miroirs de renvoi permettant de dévier et/ou envoyer le faisceau laser dans ladite cavité d'absorption,
- des moyens pour atténuer, interrompre ou diminuer l'intensité de l'arc électrique approximativement en synchronisme avec l'envoi et/ou la déviation du faisceau laser vers les moyens d'absorption de rayonnement, et
- des moyens de pilotage permettant de piloter ou commander automatiquement les moyens de déviation du faisceau laser de manière telle que le mouvement du ou des miroirs de renvoi est synchronisé avec l'arrêt de la phase de soudage, le mouvement de la ou des pièces à souder et/ou de la tête de soudage.

9. Installation de soudage selon la revendication 8, **caractérisée en ce qu'**elle comporte :
- des moyens support de pièces permettant de supporter et/ou maintenir les pièces à souder durant le soudage ;
- des moyens d'amenée automatique de pièces à souder permettant d'amener et/ou de positionner automatiquement la ou les pièces à souder sur lesdits moyens support ;
- des moyens de maintien de pièces à souder permettant de maintenir en position les pièces à souder, durant le soudage, sur lesdits moyens support ; et/ou
- des moyens d'évacuation automatique des pièces soudées permettant d'enlever les pièces desdits moyens support après soudage.

10. Installation de soudage selon l'une des revendications 8 ou 9, **caractérisée en ce qu'**elle comporte des moyens de pilotage permettant, en outre, de piloter ou commander automatiquement :
- les moyens d'amenée de pièces à souder ;
- les moyens d'évacuation des pièces soudées ;
- le début et/ou la fin du soudage ; et/ou
- le déplacement relatif de tête distribuant l'arc et de la tête distribuant le faisceau laser par rapport aux pièces à souder.

11. Installation de soudage selon l'une des revendications 8 à 10, **caractérisée en ce que** le faisceau laser est émis par un laser de type YAG ou CO₂ et/ou **en ce que** l'arc électrique est délivrée par une torche à arc-plasma, de préférence le faisceau laser et ledit arc sont délivrés par une tête de soudage unique.

12. Procédé de fabrication de pièces ou de structures soudées destinées à l'industrie automobile dans lequel on réalise au moins un soudage desdites pièces par mise en oeuvre d'un procédé de soudage hybride laser-arc selon l'une des revendications 1 à 7 ou d'une installation de soudage selon l'une des revendications 8 à 11.

13. Utilisation d'une installation de soudage selon l'une des revendications 8 à 11 pour souder au moins un flanc rabouté destiné à constituer au moins une partie d'un élément de carrosserie de véhicule.

14. Utilisation d'un procédé de soudage hybride selon l'une des revendications 1 à 7 pour assembler par soudage des pièces métalliques ayant des épaisseurs différentes, en particulier des flancs raboutés.

15. Procédé de fabrication d'éléments de carrosseries de véhicules dans lequel on réalise un soudage de pièces métalliques entrant dans la constitution desdits éléments de carrosserie par mise en oeuvre d'un procédé de soudage hybride laser-arc selon l'une des revendications 1 à 7, de préférence des pièces métalliques en aluminium ou en alliage d'aluminium.

16. Procédé de soudage selon l'une des revendications 1 à 7, dans lequel on utilise en tant que gaz d'assistance du faisceau laser un gaz choisi parmi l'argon, l'hélium, l'azote ou leurs mélanges et/ou on utilise en tant que gaz plasmagène un gaz choisi parmi l'argon, l'hélium, l'azote, l'hydrogène ou leurs mélanges.

## Patentansprüche

1. Verfahren zum Schweißen von einem oder mehreren zu schweißenden metallischen Werkstücken durch Anwendung zumindest eines Laserbündels und zumindest eines elektrischen Lichtbogens, insbesondere eines Plasmalichtbogens, bei dem nach der Herstellung zumindest einer Schweißverbindung an dem oder den Werkstücken:
(a) das Laserbündel mittels eines oder mehrerer beweglicher Umlenkspiegel zu Strahlungsabsorptionsmitteln mit zumindest einem Absorptionshohlraum gelenkt und/oder umgeleitet wird, die es gestatten, zumindest einen Teil der Strahlung des Laserbündels zu absorbieren,
(b) die Intensität des elektrischen Lichtbogens annähernd synchron zu dem Lenken und/oder Umleiten des Laserbündels zu den Strahlungsabsorptionsmitteln, die es gestatten, zumindest einen Teil der Strahlung des Laserbündels zu absorbieren, abgeschwächt oder vermindert wird oder der Lichtbogen unterbrochen wird, und bei dem:
(c) die Bewegung des oder der Umlenkspiegel mit dem Stoppen der Schweißphase, der Bewegung des oder der zu schweißenden Werkstücke und/oder des Schweißkopfs synchronisiert ist.

2. Schweißverfahren nach Anspruch 1, **dadurch gekennzeichnet, dass** das Laserbündel während zumindest eines Teils der Dauer der Unterbrechung des Schweißens, die zwischen dem Ende des Schweißens einer ersten Schweißverbindung und dem Beginn des Schweißens einer zweiten Schweißverbindung liegt, und vorzugsweise während der ganzen Dauer der Unterbrechung des Schweißens zu den Strahlungsabsorptionsmitteln gelenkt und/oder umgeleitet wird.

3. Schweißverfahren nach einem der Ansprüche 1 oder 2, **dadurch gekennzeichnet, dass** das Laserbündel von einem Laser' des YAG- oder des CO₂-Typs abgestrahlt wird und/oder der elektrische Lichtbogen ein Plasmalichtbogen ist.

4. Schweißverfahren nach einem der Ansprüche 1 bis 3, **dadurch gekennzeichnet, dass** das Laserbündel und der Lichtbogen durch einen einzelnen Schweißkopf abgegeben werden.

5. Schweißverfahren nach einem der Ansprüche 1 bis 4, **dadurch gekennzeichnet, dass** während zumindest eines Teils der Dauer der Unterbrechung des Schweißens, die zwischen dem Ende des Schweißens einer ersten Schweißverbindung und dem Beginn des Schweißens einer zweiten Schweißverbindung liegt, und insbesondere beim Beginn dieser Dauer der Unterbrechung des Schweißens oder am Ende der Schweißphase die Intensität des elektrischen Lichtbogens unterbrochen, abgeschwächt oder vermindert wird.

6. Schweißverfahren nach einem der Ansprüche 1 bis 5, **dadurch gekennzeichnet, dass** das oder die zu schweißenden Werkstücke aus einem Metall oder einer Metalllegierung bestehen, für die beschichtete oder nicht beschichtete Stähle, insbesondere Baustähle, Kohlenstoffstähle, Stähle mit einer Zinkschicht an der Oberfläche, nicht oxidierbare Stähle, Aluminium oder Aluminiumlegierungen, hoch elastische Stähle, die auch HLES genannt werden, gewählt werden, wobei das oder die zu schweißenden Werkstücke vorzugsweise zusammengesetzte Seitenteile sind, die insbesondere zur Fertigung von Karosserieelementen eines Fahrzeugs verwendbar sind.

7. Schweißverfahren nach Anspruch 1, **dadurch gekennzeichnet, dass** es zumindest einen Schweißschritt umfasst, der den elektrischen Lichtbogen, insbesondere einen Plasmalichtbogen, und das Laserbündel kombiniert.

8. Hybride Lichtbogen-Laser-Schweißanlage mit
- zumindest einem Laserbündelgenerator zum Abgeben zumindest eines Laserbündels, und
- zumindest einer Elektrode, die durch zumindest eine elektrische Stromquelle versorgt wird, um zumindest einen elektrischen Lichtbogen zu erzeugen,
**dadurch gekennzeichnet, dass** sie außerdem folgendes umfasst:
- Laserstrahlungsabsorptionsmittel mit zumindest einem Absorptionshohlraum, die es gestatten, zumindest zeitweise zumindest einen Teil der Strahlung des Laserbündels zu absorbieren, und
- Mittel zum Umleiten des Bündels mit einem oder mehreren Umlenkspiegeln, die es gestatten, das Laserbündel in den Absorptionshohlraum umzuleiten und/oder zu lenken,
- Mittel zum Abschwächen, Unterbrechen oder Vermindern der Intensität des elektrischen Lichtbogens annähernd synchron zu dem Lenken und/oder Umleiten des Laserbündels zu den Strahlungsabsorptionsmitteln, und
- Steuermitteln, die es gestatten die Mittel zum Umleiten des Laserbündels so automatisch zu steuern oder zu betätigen, däss die Bewegung des oder der Umlenkspiegel mit der Unterbrechung der Schweißphase, der Bewegung des oder der zu schweißenden Werkstücke und/oder des Schweißkopfs synchronisiert ist.

9. Schweißanlage nach Anspruch 8, **dadurch gekennzeichnet, dass** sie Folgendes umfasst:
- Mittel zum Tragen von Werkstücken, die es gestatten, die zu schweißenden Werkstücke während des Schweißens zu tragen und/oder zu halten,
- Mittel zum automatischen Mitnehmen von zu schweißenden Werkstücken, die es gestatten, das oder die zu schweißenden Werkstücke automatisch mitzunehmen und/oder auf den Tragmitteln zu positionieren,
- Mittel zum Halten von zu schweißenden Werkstücken, die es gestatten, die zu schweißenden Werkstücke während des Schweißens auf den Trägermitteln in ihrer Position zu halten, und/oder
- Mittel zur automatischen Abführung der geschweißten Werkstücke, die es gestatten, die Werkstücke nach dem Schweißen von den Tragmitteln abzuheben.

10. Schweißanlage nach einem der Ansprüche 8 oder 9, **dadurch gekennzeichnet, dass** sie Steuermittel umfassen, die es gestatten, außerdem Folgendes automatisch zu steuern oder zu betätigen:
- die Mittel zur Mitnahme von zu schweißenden Werkstücken,
- die Mittel zum Abführen der geschweißten Werkstücke,
- den Beginn und/oder das Ende des Schweißens, und/oder
- die Relativverschiebung des Kopfs, der den Lichtbogen abgibt, und des Kopfs, der das Laserbündel abgibt, relativ zu den zu schweißenden Werkstücken.

11. Schweißanlage nach einem der Ansprüche 8 bis 10, **dadurch gekennzeichnet, dass** das Laserbündel durch einen Laser des YAG- oder des CO₂-Typs abgestrahlt wird und/oder dass der elektrische Lichtbogen von einem Plasmalichtbogenbrenner abgegeben wird, wobei das Laserbündel und der Lichtbogen vorzugsweise durch einen einzigen Schweißkopf abgegeben werden.

12. Verfahren zur Herstellung von Werkstücken oder geschweißten Strukturen, die für die Automobilindustrie bestimmt sind, bei dem. zumindest ein Schweißen der Werkstücke durch Verwendung eines hybriden Laser-Lichtbogen-Schweißverfahrens nach einem der Ansprüche 1 bis 7 oder einer Schweißanlage nach einem der Ansprüche 8 bis 11 ausgeführt wird.

13. Verwendung einer Schweißanlage nach einem der Ansprüche 8 bis 11 zum Schweißen zumindest eines zusammengesetzten Seitenteils, das zumindest einen Teil eines Fahrzeugkarosserieelements bilden soll.

14. Verwendung eines Verfahrens zum Hybridschweißen nach einem der Ansprüche 1 bis 7 zum Zusammenfügen von metallischen Werkstücken mit unterschiedlichen Dicken, insbesondere von zusammengesetzten Seitenteilen, durch Schweißen.

15. Verfahren zum Herstellen von Karosserieelementen von Fahrzeugen, bei dem eine Schweißung von Metallwerkstücken ausgeführt wird, die zum Bau der Karosserieelemente verwendet werden, durch Anwendung eines hybriden Lichtbogen-Laser-Schweißverfahrens nach einem der Ansprüche 1 bis 7, vorzugsweise von metallischen Werkstücken aus Aluminium oder einer Aluminiumlegierung.

16. Verfahren zum Schweißen nach einem der Ansprüche 1 bis 7, bei dem als Hilfsgas des Laserbündels Argon, Helium, Stickstoff oder deren Gemische gewählt werden und/oder als plasmaerzeugendes Gas Argon, Helium, Stickstoff, Wasserstoff oder deren Gemische verwendet werden.

## Claims

1. Process for welding one or more metal workpieces to be welded together by using at least one laser beam and at least one electric arc, in particular a plasma arc, in which process, after at least one welded joint has been produced on the said workpiece(s):
(a) the laser beam is sent and/or deflected, by means of one or more movable deflection mirrors, into radiation absorption means comprising at least one absorption cavity allowing at least some of the radiation of the said laser beam to be absorbed,
(b) the intensity of the electric arc is attenuated or reduced or the arc is interrupted approximately in synchronism with the sending and/or deflection of the laser beam' 'into the radiation absorption means making it possible to absorb at least some of the radiation of the said laser beam,
and in which:
(c) the movement of the deflection mirror or mirrors is synchronized with the stopping of the welding phase, the movement of the workpiece or workpieces to be welded and/or of the welding head.

2. Welding process according to Claim 1, **characterized in that** the laser beam is sent and/or deflected into the radiation absorption means for at least part of the welding stop time elapsing between the end of welding one welded joint and the start of welding the next welded joint, preferably throughout the said welding stop time.

3. Welding process according to either of Claims 1 and 2, **characterized in that** the laser beam is emitted by a YAG- or CO₂-type laser and/or **in that** the electric arc is a plasma arc.

4. Welding process according to one of Claims 1 to 3, **characterized in that** the laser beam and the said arc are delivered by a single welding head.

5. Welding process according to one of Claims 1 to 4, **characterized in that**, during at least part of the welding stop time elapsing between the end of welding one welded joint and the start of welding the next welded joint, especially right at the start of this welding stop phase or at the end of the welding phase, the electric arc current is interrupted, attenuated or reduced.

6. Welding process according to one of Claims 1 to 5, **characterized in that** the workpiece or workpieces to be welded are made of a metal or a metal alloy chosen from coated or uncoated steels, particularly assembly steels, carbon steels, steels having a layer of zinc alloy on the surface, stainless steels, aluminium or aluminium alloys and high yield point steels, also known as HYS, preferably the said workpiece or workpieces to be welded are tailored blanks, particularly those that can be used for manufacturing body components of a vehicle.

7. Welding process according to Claim 1, **characterized in that** it comprises at least one welding step which combines the electric arc, particularly a plasma arc, with the laser beam.

8. Hybrid arc/laser welding unit comprising:
- at least one laser beam generator for delivering at least one laser beam and
- at least one electrode supplied by at least one electric current source in order to generate at least one electric arc,
**characterized in that** it furthermore includes:
- laser radiation absorption means comprising at least one absorption cavity making it possible to absorb, at least temporarily, at least some of the radiation of the said laser beam and
- beam deflection means comprising one or more deflection mirrors for deflecting and/or sending the laser beam into the said absorption cavity,
- means for attenuating, interrupting or reducing the intensity of the electric arc approximately in synchronism with the sending and/or deflection of the laser beam into the radiation absorption means and
- control means for automatically driving or controlling the laser beam deflection means in such a way that the movement of the deflection mirror or mirrors is synchronized with the stopping of the welding phase, the movement of the workpiece or workpieces to be welded and/or of the welding head.

9. Welding unit according to Claim 8, **characterized in that** it includes:
- means for supporting the workpieces, making it possible to support and/or hold the workpieces to be welded during the welding;
- means for automatically feeding the workpieces to be welded, making it possible to automatically feed and/or position the workpiece(s) to be welded on the said support means;
- means for holding the workpieces to be welded, making it possible to hold the workpieces to be welded during the welding operation in position on the said support means; and/or
- means for automatically removing the welded workpieces, making it possible to remove the workpieces from the said support means after welding.

10. Welding unit according to either of Claims 8 and 9, **characterized in that** it includes control means making it possible, furthermore, to automatically control:
- the means for feeding the workpieces to be welded;
- the means for removing the welded workpieces;
- the stop and/or the end of the welding; and/or
- the relative movement of the head delivering the arc and of the head delivering the laser beam with respect to the workpieces to be welded.

11. Welding unit according to one of Claims 8 to 10, **characterized in that** the laser beam is emitted by a YAG or CO₂-type laser and/or **in that** the electric arc is delivered by a plasma-arc torch, preferably the laser beam and the said arc being delivered by a single welding head.

12. Process for manufacturing welded components or structures intended for the motor-vehicle industry, in which process at least one welding operation on the said components is carried out by the use of a hybrid arc/laser welding process according to one of Claims 1 to 7 or of a welding unit according to one of Claims 8 to 11.

13. Use of a welding unit according to one of Claims 8 to 11 to weld at least one tailored blank intended to form at least part of a vehicle body component.

14. Use of a hybrid welding process according to one of Claims 1 to 7 to assemble, by welding, metal workpieces having different thicknesses, particularly tailored blanks.

15. Process for manufacturing vehicle body components, in which metal workpieces used in the construction of the said body components are welded by using a hybrid arc/laser welding process according to one of Claims 1 to 7, preferably metal workpieces made of aluminium or of aluminium alloy.

16. Welding process according to one of Claims 1 to 7, in which a gas chosen from argon, helium, nitrogen or mixtures thereof is used as laser beam assist gas and/or a gas chosen from argon, helium, nitrogen, hydrogen or mixtures thereof is used as plasma gas.
